# EUROPEAN PATENT SPECIFICATION

(11) **EP 4 461 412 B1**
(45) Date of publication and mention of the grant of the patent: **03.06.2026**
(21) Application number: 22928565.5
(22) Date of filing: 22.02.2022
(51) Int. Cl.: B03C 7/04, B03C 7/12, B29B 17/00, B03C 7/06, B03C 7/00, B03C 7/08, B29B 17/02

(54) **ELECTROSTATIC SORTING DEVICE**
ELEKTROSTATISCHE SORTIERVORRICHTUNG
DISPOSITIF DE TRI ÉLECTROSTATIQUE

(43) Date of publication of application: 13.11.2024
(73) Proprietor: MITSUBISHI ELECTRIC CORPORATION, Chiyoda-ku Tokyo 100-8310 (JP)
(72) Inventor: NAKAMURA, Yasuhiro, Tokyo 100-8310 (JP); INANAGA, Yasutaka, Tokyo 100-8310 (JP)
(74) Representative: Meissner Bolte Partnerschaft mbB
(86) International application number: PCT/JP2022/007367
(87) International publication number: WO 2023/162034

(56) References cited:
- WO-A1-00/27534
- CN-B- 109 261 363
- JP-A- 2000 117 149
- JP-A- 2000 117 149
- JP-A- 2011 131 154
- JP-A- 2011 131 154
- JP-A- 2014 168 754
- JP-A- 2020 022 931
- JP-A- H11 123 346
- JP-B2- 5 701 237

## Description

### TECHNICAL FIELD

The present disclosure relates to an electrostatic separator.

### BACKGROUND ART

An electrostatic separator has conventionally been known that separates mixtures containing a plurality of types of material fragments using static electricity. For example, Japanese Patent Laying-Open No. 10-263438 discloses an electrostatic separator including a grounded roller-type ground electrode, a curve-shaped high-voltage electrode arranged to face the ground electrode, and suction means integrated with the high-voltage electrode. In the electrostatic separator disclosed in Japanese Patent Laying-Open No. 10-263438, the material fragments charged with an opposite sign to that of the roller-type ground electrode are attracted to the ground electrode to be collected, whereas the material fragments charged with the same sign as that of the ground electrode are attracted to the high-voltage electrode and sucked by the suction means to be collected. JP2011131154A discloses the features of the preamble of the independent claim: an electrostatic separator comprising a transfer unit to transfer a mixture that is electrically charged, wherein the transfer unit includes a vibratory feeder and a curved end portion. The electrostatic separator further comprises a counter electrode facing the curved end portion and a pair of lower counter electrodes located below the curved end portion, such that they are spaced from each other forming an electrostatic field space where the mixture is separated. JP5701237B2 discloses a similar electrostatic separator, but the vibratory feeder is lacking a curved end portion and the counter electrode disclosed in this document is not facing the end portion, but is implemented as a mesh shape or polygonal-prism shape above the vibratory feeder to attract fine dust particles.

### CITATION LIST

### PATENT LITERATURE

PTL 1: Japanese Patent Laying-Open No. 10-263438
PTL 2: Japanese Patent Laying-Open No. 2011131154.
PTL 3: Japanese Patent No. 5701237.

### SUMMARY OF THE INVENTION

### TECHNICAL PROBLEM

In the conventional electrostatic separator described above, it is conceivable to increase the strength of an electric field formed between the ground electrode and the high-voltage electrode in order to improve the efficiency of separating the material fragments. In such a measure, if the value of the voltage itself applied to the high-voltage electrode is made extremely high, the value of the voltage that can be applied to the high-voltage electrode has its limits.

Therefore, the present disclosure has an object to provide an electrostatic separator that can easily improve the efficiency of separating material fragments contained in a mixture.

### SOLUTION TO PROBLEM

An electrostatic separator according to the appended claims improves the efficiency of the separation of material fragments in a mixture.

### ADVANTAGEOUS EFFECTS OF INVENTION

According to the above, an electrostatic separator is obtained that can easily improve the efficiency of separating fragments contained in a mixture.

### BRIEF DESCRIPTION OF DRAWINGS

Fig. 1 is a schematic view of an electrostatic separator according to Embodiment 1.
Fig. 2 is a partially enlarged schematic view of the electrostatic separator shown in Fig. 1.
Fig. 3 is a partially enlarged schematic view of the electrostatic separator shown in Fig. 1.
Fig. 4 is a schematic view of an electrostatic separator according to Embodiment 2.
Fig. 5 is a partially enlarged schematic view of the electrostatic separator shown in Fig. 4.
Fig. 6 is a schematic view of an electrostatic separator according to an example not falling under the claim wording.
Fig. 7 is a partially enlarged schematic view of the electrostatic separator shown in Fig. 6.
Fig. 8 is a partially enlarged schematic view of an electrostatic separator according to Embodiment 3.

### DESCRIPTION OF EMBODIMENTS

The embodiments of the present disclosure will be described below. The same components have the same reference characters allotted, and description thereof will not be repeated.

### Embodiment 1

### <Structure of Electrostatic Separator>

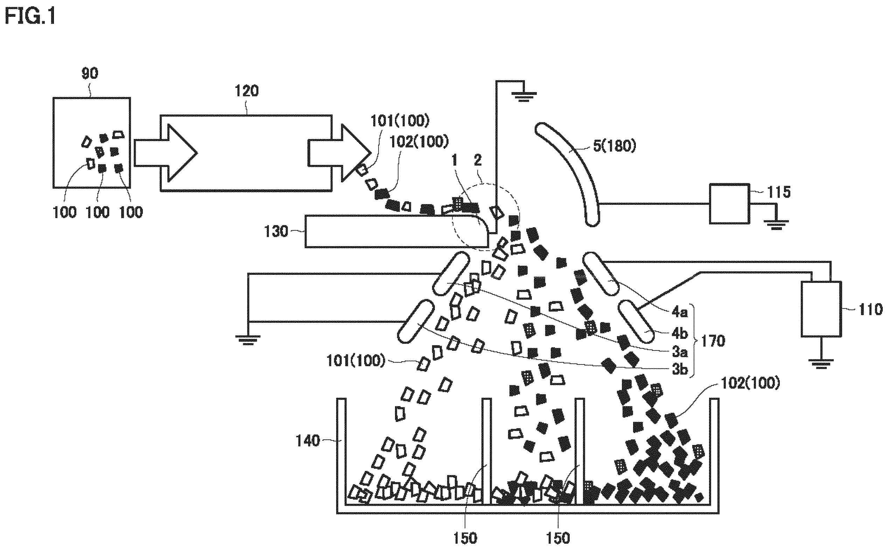

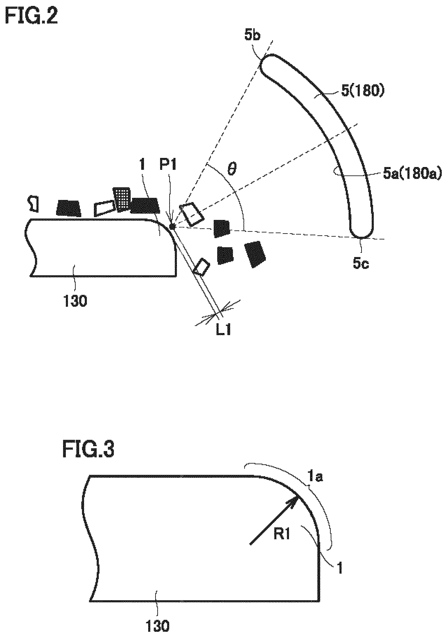

Fig. 1 is a schematic view of an electrostatic separator according to Embodiment 1. Figs. 2 and 3 are partially enlarged schematic views of the electrostatic separator shown in Fig. 1. Fig. 2 shows the positional relationship between an end portion 1 and a counter electrode 180 in the electrostatic separator. Fig. 2 is a sectional schematic view in a cross-section taken along the direction of transfer of a mixture 100 in a transfer unit 130 at end portion 1 in the electrostatic separator. Fig. 3 is a sectional schematic view in a cross-section similar to Fig. 2, which shows the structure of end portion 1 in transfer unit 130.

As shown in Figs. 1 to 3, the electrostatic separator according to the present disclosure is used in, for example, a resin recycling process. The electrostatic separator mainly includes a storage unit 90, a charge processing unit 120, transfer unit 130, counter electrode 180, a pair of lower counter electrodes 170, and a collection container 140. Storage unit 90 stores mixtures 100, which are to be separated. Mixture 100 contains, for example, material fragments that are process targets made of a resin processed into flakes. Mixture 100 contains a plurality of types of material fragments made of different materials. The material fragment may have any shape such as flake shape, grain shape, or rod shape.

Charge processing unit 120 performs a process of electrically charging mixture 100 supplied from storage unit 90. Charge processing unit 120 may have any structure that can electrically charge a plurality of types of process targets constituting mixture 100. Charge processing unit 120 may be, for example, a triboelectric charging device that agitates mixture 100 to triboelectrically charge mixture 100. Charge processing unit 120 is a device that in advance electrically charges the material fragments contained in mixture 100 in order to separate, by counter electrode 180, end portion 1, and the pair of lower counter electrodes 170, these material fragments by material having different charging characteristics, as described later.

Transfer unit 130 transfers mixture 100 to be separated, for example, horizontally. Transfer unit 130 includes a vibratory feeder. Mixture 100 that is transferred by the adopted structure is electrically charged in charge processing unit 120. Mixture 100 contains a positively charged process target and a negatively charged process target according to the quality of material of the process target. Transfer unit 130 includes end portion 1 located downstream in the direction of transfer of mixture 100. Transfer unit 130 is arranged to extend horizontally from a region located below charge processing unit 120. End portion 1 is located opposite to the upstream end portion located below charge processing unit 120 in transfer unit 130. End portion 1 is grounded. End portion 1 includes a surface (second surface portion 1a) formed of an electric conductor. End portion 1 can be formed by, for example, bending a sheet metal.

Counter electrode 180 faces end portion 1 and is arranged on the downstream side opposite to the upstream side on which charge processing unit 120 is arranged as viewed form end portion 1. Counter electrode 180 includes a portion arranged horizontally above end portion 1 as viewed from end portion 1 and a portion that faces end portion 1 horizontally. The width of counter electrode 180 in the direction (lateral direction) perpendicular to the direction of transfer of mixture 100 is less than or equal to the width of end portion 1 in the lateral direction. Alternatively, when the region that is passed by mixture 100 at end portion 1 is only the central portion of end portion 1 in the lateral direction, the width of counter electrode 180 may be greater than or equal to the width of the central portion of end portion 1 and less than the width of end portion 1. In other words, the width of counter electrode 180 may be smaller than the width of end portion 1.

Counter electrode 180 is electrically connected to a power supply 115. Power supply 115 applies a voltage to counter electrode 180. As a voltage is applied to counter electrode 180 by power supply 115, an electric field is formed between end portion 1 and counter electrode 180. Counter electrode 180 is formed of an electric conductor. Counter electrode 180 is formed of, for example, a metallic solid body (block). Counter electrode 180 and end portion 1 are equipment for applying a high electric field to material fragments of mixture 100 before being fed into an electrostatic field space formed by the pair of lower counter electrodes 170, which will be described later. This electric field subjects the material fragments to any one of a force in the direction toward end portion 1 and a force in the direction toward counter electrode 180 according to their state of electrical charging.

The area of a first surface portion 180a of counter electrode 180 which faces end portion 1 is larger than the area of second surface portion 1a of end portion 1 which faces counter electrode 180. For example, the area of second surface portion 1a of end portion 1 may be less than or equal to 20% of the area of first surface portion 180a of counter electrode 180. In this case, an electric field can concentrate in the vicinity of second surface portion 1a of end portion 1, leading to a sufficiently high electric field strength in the vicinity of second surface portion 1a. First surface portion 180a of counter electrode 180 refers to the entire surface portion of counter electrode 180 which is visible from the end portion 1 side. Also, second surface portion 1a at end portion 1 refers to the entire curved surface shape portion of end portion 1 which faces counter electrode 180. Transfer unit 130 includes a conductor portion that serves as a ground electrode arranged at end portion 1 and having a surface of curved surface shape. The surface of the conductor portion has a curved surface shape, and the entire surface of the conductor portion on the outer circumferential side (i.e., a portion that has a curved surface shape) is second surface portion 1a shown in Fig. 3. This conductor portion is, for example, a portion (corner portion) with a surface having a curved surface shape at end portion 1 of transfer unit 130 shown in Fig. 3. The conductor portion at end portion 1 may be electrically connected to another portion (e.g., a movable portion such as feeder) of transfer unit 130 or may be integrated with the other portion.

Second surface portion 1a of end portion 1 has a curved surface shape projecting toward counter electrode 180. First surface portion 180a of counter electrode 180 has a curved surface shape recessed so as to be apart from end portion 1. In other words, counter electrode 180 is a curved electrode 5 with curved first surface portion 180a. In the cross-section shown in Fig. 2, first surface portion 180a and second surface portion 1a have an arc shape. A radius of curvature R1 of second surface portion 1a is smaller than the radius of curvature of first surface portion 180a.

A center P1 of the radius of curvature in the sectional shape of first surface portion 180a overlaps end portion 1. Herein, center P1 of the radius of curvature overlapping end portion 1 includes, in the cross-section shown in Fig. 2, the case where center P1 overlaps end portion 1 and the case where center P1 overlaps second surface portion 1a of end portion 1, as well as the case where center P1 is located outside end portion 1 and is arranged in a region of 180 mm or less from second surface portion 1a. In other words, a distance L1 between center P1 and second surface portion 1a is 180 mm or less. Considered here is, for example, the case where the radius of curvature of first surface portion 180a is 1000 mm and an angle θ shown in Fig. 2 is, for example, 60°. In this case, distance L1 described above can be made sufficiently smaller than 180 mm by determining the orientation of counter electrode 180 such that center P1 is located in the region between counter electrode 180 and end portion 1 and by setting the shortest distance between first surface portion 180a and end portion 1 to 1100 mm or less. When distance L1 is 180 mm or less, an electric field can sufficiently concentrate in the vicinity of end portion 1, leading to a sufficiently high electric field strength in the vicinity of second surface portion 1a. In this case, the separation performance for mixtures 100 can be exhibited, as will be described later. When distance L1 is greater than 180 mm, the electric field insufficiently concentrates in the vicinity of second surface portion 1a of end portion 1, leading to difficulty in obtaining a sufficiently high electric field strength. In this case, it is difficult to sufficiently improve the separation performance for mixtures 100.

As shown in Fig. 3, the sectional shape of second surface portion 1a of end portion 1 is a curved surface shape. More specifically, the sectional shape is an arc shape, as described above. Radius of curvature R1 in the cross-section of second surface portion 1a is, for example, 0.5 mm or more and 200 mm or less. For example, radius of curvature R1 described above can be set to 0.5 mm or more and 200 mm or less by setting the width of second surface portion 1a in the left-right direction (the direction of transfer of mixture 100) of Fig. 3 to 0.5 mm or more and 200 mm or less and setting a center angle of second surface portion 1a (an angle formed by the opposite end portions of second surface portion 1a as viewed from the center of radius of curvature R1 in the sectional shape of second surface portion 1a having an arc shape) shown in Fig. 3 to 90°. The electric field strength can be increased in a wide range in the vicinity of second surface portion 1a of end portion 1 by defining the range of radius of curvature R1 as described above. When radius of curvature R1 described above is less than 0.5 mm, air discharge may occur due to excessive concentration of the electric field in the vicinity of end portion 1. Further, the cost of manufacturing an electrostatic separator may increase due to difficulty in processing end portion 1. When radius of curvature R1 described above is greater than 200 mm, the electric field insufficiently concentrates in the vicinity of end portion 1, leading to difficulty in obtaining a sufficiently high electric field strength.

The horizontal (in Fig. 2, lateral) position of a first end 5b located on the transfer unit 130 side among the opposite ends of counter electrode 180 in the direction of transfer of mixture 100 in transfer unit 130 is arranged between the horizontal position of a second end 5c located opposite to first end 5b among the opposite ends of counter electrode 180 and the horizontal position of end portion 1. As shown in Fig. 3, counter electrode 180 is arranged obliquely above end portion 1 as viewed from end portion 1. Herein, counter electrode 180 being arranged obliquely above end portion 1 as viewed from end portion 1 refers to the state in which counter electrode 180 is spaced from end portion 1 in the horizontal direction, first end 5b of counter electrode 180 is located in the region vertically above end portion 1, and second end 5c is located side by side with end portion 1 in the horizontal direction or is arranged in the region above end portion 1. For counter electrode 180, first end 5b and second end 5c may be both arranged in the region on the upper side relative to end portion 1. Counter electrode 180 is spaced from end portion 1 in the horizontal direction. In other words, counter electrode 180 may be arranged so as not to overlap end portion 1, as viewed from the upper side in the vertical direction.

As shown in Fig. 2, in counter electrode 180, an angle θ (center angle or spread angle) between first end 5b and second end 5c as viewed from center P1 can be set to, for example, 30° or more and 90° or less. This angle θ may be 40°or more, 45° or more, or 50° or more. This angle θ may be 80° or less, or 70° or less. At angle θ as described above, the separation performance for mixtures 100 can be exhibited more easily, as will be described later.

The pair of lower counter electrodes 170 are located below end portion 1 and are spaced from each other. The pair of lower counter electrodes 170 include at least one set of electrodes 3a, 4a. In Fig. 1, the pair of lower counter electrodes 170 include two sets of electrodes 3a, 3b, 4a, 4b. The pair of lower counter electrodes 170 may include three or more sets of electrodes. In the electrostatic separator described above, electrodes 3a, 4a of the pair of lower counter electrodes 170 are spaced from each other along the direction from end portion 1 toward counter electrode 180. Electrodes 3b, 4b are also spaced from each other along the direction from end portion 1 toward counter electrode 180. The pair of lower counter electrodes 170 form an electrostatic field space, as will be described later. The material fragments of mixture 100 that has passed near end portion 1 and has been fed into the electrostatic field space formed by the pair of lower counter electrodes 170 are subjected to an electrostatic force in the right direction or the left direction of Fig. 1 according to the state of electrical charging. As a result, material fragments 101, 102 can be separated according to the state of electrical charging, as will be described later.

Electrode 3a is located below transfer unit 130. Electrode 4a is located below counter electrode 180. The distance between the upper end of electrode 3a on the end portion 1 side and the upper end of electrode 4a on the end portion 1 side is smaller than the distance between the lower end of electrode 3a which is opposite to the upper end thereof and the lower end of electrode 4a which is opposite to the upper end thereof. In other words, the distance between electrode 3a and electrode 4a increases with increasing distance from end portion 1, that is, from end portion 1 to the lower side. The upper end of electrode 4a is located directly below second end 5c (see Fig. 2) of counter electrode 180.

Electrode 3b is located below transfer unit 130 and at a position lower than that of electrode 3a. Electrode 4b is located below counter electrode 180 and at a position lower than that of electrode 4a. The distance between the upper end of electrode 3b on the end portion 1 side and the upper end of electrode 4b on the end portion 1 side is smaller than the distance between the lower end of electrode 3b which is opposite to the upper end thereof and the lower end of electrode 4b which is opposite to the upper end thereof. In other words, the distance between electrode 3b and electrode 4b increases with increasing distance from end portion 1. Also, the distance between electrode 3b and electrode 4b is greater than the distance between the lower end of electrode 3a and the lower end of electrode 4a.

Electrodes 3a, 3b are electrically grounded. Electrodes 4a, 4b are electrically connected to a power supply 110. Power supply 110 applies a voltage to electrodes 4a, 4b. Upon application of a voltage to electrodes 4a, 4b, a lateral electric field is formed between electrodes 3a, 3b, and electrodes 4a, 4b. In other words, an electrostatic field space is formed between electrodes 3a, 3b and electrodes 4a, 4b. The polarity of counter electrode 180 is the same as the polarity of electrodes 4a, 4b located on the counter electrode 180 side in the pair of lower counter electrodes 170.

Collection container 140 is arranged below the pair of lower counter electrodes 170. Collection container 140 collects, by state of electrical charging, process targets in different states of electrical charging. The process target is subjected to a force applied by the electric field in the electrostatic field space formed by the pair of lower counter electrodes 170, so that its falling path is changed for every state of electrical charging. In other words, the route of material fragment 101 that is positively charged is changed to the electrodes 3a, 3b side owing to the force from the electrostatic field. Also, the route of material fragment 102 that is negatively charged is changed to the electrodes 4a, 4b side owing to the force from the electrostatic field.

The inside of collection container 140 is divided into a plurality of container portions by a partitioning member 150. In collection container 140, the plurality of container portions are arranged side by side in the direction from electrode 3a toward electrode 4a.

First end 5b and second end 5c of counter electrode 180 are provided with glass, which is bonded thereto and serves as an insulating member, and are fixed to another member of the electrostatic separator with the glass in between. Also, the end portions of electrodes 3a, 3b, 4a, 4c of the pair of lower counter electrodes 170 are provided with glass, which is bonded thereto and serves as an insulating member, and are fixed to another member of the electrostatic separator with the glass in between.

At first end 5b and second end 5c of counter electrode 180 to which a high voltage is applied, air discharge may occur due to concentration of an electric field. Such air discharge may cause a separation failure of mixtures 100 to be separated. Thus, in order to suppress air discharge, first end 5b and second end 5c are preferably processed into a curved surface shape (rounded) as shown in Figs. 1 and 2. Also for the same reason, in electrodes 3a, 3b, 4a, 4b of the pair of lower counter electrodes 170, the end portions and the corner portions on the outer circumference are preferably processed into a curved surface shape (rounded) as shown in Fig. 1. Such processing can suppress occurrence of discharge owing to mitigation of an electric field at the end portions and the corner portions. In order to suppress air discharge, the surfaces of counter electrode 180 and electrodes 4a, 4b are preferably polished to reduce surface asperities to the extent possible. Counter electrode 180 and electrodes 4a, 4b may be formed of an electric conductor that is a solid body 10 mm in thickness, for example, metal.

### <Operation of Electrostatic Separator>

Next, an operation of the electrostatic separator shown in Figs. 1 to 3 will be described. Considered here is the case where mixture 100 to be separated contains two types of material fragments. Mixture 100 is supplied from storage unit 90 to charge processing unit 120. In charge processing unit 120, for example, as mixture 100 is agitated, the material fragments contained in mixture 100 are rubbed against each other to become electrically charged. Description will be given below by taking, as an example, the case where a first material fragment, which is one of the two types of material fragments, is positively charged, and a second material fragment, which is the other of the two types of material fragments, is negatively charged.

A positive high voltage is applied from power supply 110, which is a high-voltage power supply, to electrodes 4a, 4b of the pair of lower counter electrodes 170. As a result, an electrostatic field space is formed in the region between electrodes 4a, 4b and grounded electrodes 3a, 3b constituting the pair of lower counter electrodes 170. Also, a positive high voltage is applied from power supply 115, which is a high-voltage power supply, to curved electrode 5 serving as counter electrode 180. As a result, an electrostatic field space is formed between curved electrode 5 to which a high voltage is applied and end portion 1 that serves as a grounded curved portion. Herein, the area of an inner circumferential surface 5a of curved electrode 5 which is first surface portion 180a is larger than the area of second surface portion 1a of end portion 1. Such an imbalance between the area of first surface portion 180a and the area of second surface portion 1a forms an electric field concentrated region 2 in the vicinity of second surface portion 1a having a relatively small area.

At end portion 1 that serves as a curved portion, radius of curvature R1 of second surface portion 1a is, for example, 20 mm, as shown in Fig. 3. In this case, occurrence of a problem can be suppressed, such as occurrence of air discharge resulting from concentration of an electric field due to a too small radius of curvature of second surface portion 1a. Also, counter electrode 180 as described above and end portion 1 including second surface portion 1a having a curved surface shape form, in a relatively large region around end portion 1, a region (electric field concentrated region 2) that exhibits a relatively high electric field strength though it has an electric field strength smaller than the electric field strength (2.8 kV/mm) at which air discharge is formed. Since electric field concentrated region 2 is formed while suppressing occurrence of air discharge as described above, radius of curvature R1 of second surface portion 1a at end portion 1 can be set to 0.5 mm or more and 200 mm or less, and the ratio of the area of second surface portion 1a of end portion 1 to the area of first surface portion 180a of counter electrode 180 can be set to 20% or less.

In electric field concentrated region 2, thus, a high electric field can be applied to the material fragments constituting mixture 100 transferred by transfer unit 130 without causing air discharge. Curved electrode 5 is curved to be recessed relative to end portion 1 located at the tip of transfer unit 130. Compared with the case where not curved electrode 5 but a plate-shaped electrode is used as counter electrode 180, thus, a possibility that mixture 100 that has jumped out from transfer unit 130 toward curved electrode 5 may collide with curved electrode 5 can be reduced. When the material fragment of mixture 100 which collides with curved electrode 5 is negatively charged, this material fragment may adhere to curved electrode 5, but such adherence of the material fragment to curved electrode 5 can also be suppressed.

In the electrostatic separator in which electric field concentrated region 2 is formed as described above, mixture 100 triboelectrically charged in charge processing unit 120 as described above is transferred by transfer unit 130 that is a vibratory feeder. The transferred mixture 100 passes through over second surface portion 1a of end portion 1 located at the tip of transfer unit 130 and is fed from above into the electrostatic field space between electrodes 4a, 4b and electrodes 3a, 3b of the pair of lower counter electrodes 170.

At this time, immediately before mixture 100 is fed into the electrostatic field space that is a separation space, an electric field that is much higher than the electric field in the separation space is applied to mixture 100 by electric field concentrated region 2 in the vicinity of end portion 1. As a result, an electrostatic force is applied to positively-charged material fragments 101 of mixture 100 in the direction (electric field direction) from counter electrode 180 toward end portion 1. In other words, an electrostatic force is applied to positively-charged material fragments 101 such that material fragments 101 are pressed down toward second surface portion 1a of end portion 1.

In electric field concentrated region 2, also, an electrostatic force is applied to negatively-charged material fragments 102 in the direction (direction opposite to the electric field direction) from end portion 1 toward counter electrode 180. In other words, an electrostatic force is applied to negatively-charged material fragments 102 so as to facilitate jumping-out of material fragments 102 from end portion 1 toward counter electrode 180.

Subsequently, material fragments 101, 102 further fall through the electrostatic field space and are subjected to the electrostatic force by the electrostatic field between electrodes 4a, 4b and electrodes 3a, 3b. Specifically, positively-charged material fragments 101 are attracted to the electrodes 3a, 3b side by the electrostatic force. Negatively-charged material fragments 102 are attracted to the electrodes 4a, 4b side. As a result, positively-charged material fragments 101 and negatively-charged material fragments 102 contained in mixture 100 are separated from each other. The thus separated material fragments 101, 102 of mixture 100 to be separated are collected in collection container 140 for every material. Specifically, positively-charged material fragments 101 are collected in a first region (a region surrounded by the outer wall of collection container 140 and partitioning member 150) located on the electrodes 3a, 3b side in collection container 140, as shown in Fig. 1. Also, negatively-charged material fragments 102 are collected in a second region located on the electrodes 4a, 4b side in collection container 140. The material fragments that have a relatively small charge amount or are not electrically charged in mixture 100 are collected in a third region (a region sandwiched by partitioning member 150 on its opposite sides) between the first region and the second region in collection container 140.

Although the example in which transfer unit 130 is a vibratory feeder in the electrostatic separator described above has been described, a conveyor device may be used as transfer unit 130, but this does not fall under the claimed subject-matter. Also in this case, the surface, which includes an electric conductor and corresponds to second surface portion 1a, of end portion 1 facing counter electrode 180 in the conveyor device serving as transfer unit 130 preferably has a curved surface shape. For the surface corresponding to second surface portion 1a, radius of curvature R1 may be set to 0.5 mm or more and 200 mm or less as described above, and the ratio of the area of the surface that corresponds to second surface portion 1a to the area of first surface portion 180a of counter electrode 180 may be set to 20% or less.

In the electrostatic separator described above, counter electrode 180 and the pair of lower counter electrodes 170 may be connected to the same power supply 110. The area of first surface portion 180a of counter electrode 180 may be larger than the areas of the surfaces of electrodes 4a, 4b constituting the pair of lower counter electrodes 170 which face electrodes 3a, 3b. Alternatively, the area of first surface portion 180a of counter electrode 180 may be equal to the area of the surfaces of electrodes 4a, 4b constituting the pair of lower counter electrodes 170 which face electrodes 3a, 3b or may be smaller than the areas of these surfaces.

### <Functions>

The electrostatic separator according to the present disclosure includes transfer unit 130 and counter electrode 180. Transfer unit 130 transfers electrically charged mixture 100. The electrically charged mixture 100 is a target fed into an electrostatic field space to be separated according to a state of electrical charging. Transfer unit 130 includes end portion 1 in the direction of transfer of mixture 100. Counter electrode 180 faces end portion 1. Counter electrode 180 can form an electric field between end portion 1 and counter electrode 180 upon application of a voltage. The area of first surface portion 180a of counter electrode 180 which faces end portion 1 is larger than the area of second surface portion 1a of end portion 1 which faces counter electrode 180 and functions as an electrode.

Thus, electric field concentrated region 2 can be formed in the vicinity of end portion 1 upon application of a voltage to counter electrode 180. When mixture 100 to be separated is caused to fall downward from end portion 1, mixture 100 is subjected to an intense electrostatic force when passing through electric field concentrated region 2. Consequently, the electrostatic force in the direction toward end portion 1 or the direction away from end portion 1 can be applied to material fragments 101, 102 in mixture 100 according to the state of electrical charging. Thus, a force is applied to material fragments 101, 102 falling downward from end portion 1 in the direction according to the state of electrical charging from the start of falling. This can improve the separation performance when material fragments 101, 102 are separated by applying an electrostatic field below end portion 1.

The electrostatic separator described above further includes a pair of lower counter electrodes 170. The pair of lower counter electrodes 170 may be located below end portion 1 and spaced from each other. In this case, electrically-charged material fragments, which have fallen from end portion 1 into the region sandwiched between the pair of lower counter electrodes 170, can be separated reliably by the electrostatic field formed by the pair of lower counter electrodes 170.

Thus, according to the invention, the electrostatic separator according to the present disclosure includes transfer unit 130, counter electrode 180, and the pair of lower counter electrodes 170. Transfer unit 130 transfers electrically-charged mixture 100. The electrically-charged mixture 100 is a target that is fed into the electrostatic field space to be separated according to the state of electrical charging. Transfer unit 130 includes curved end portion 1 in the direction of transfer of mixture 100. Counter electrode 180 faces end portion 1, and is curved relative to the end portion 1. The pair of lower counter electrodes 170 are located below end portion 1 and spaced from each other. Counter electrode 180 can form an electric field between end portion 1 and counter electrode 180 upon application of a voltage.

Thus, the electrostatic force by the electric field formed in the vicinity of end portion 1 can be exerted on electrically-charged mixture 100 before being fed into the electrostatic field space formed by the pair of lower counter electrodes 170. As a result, an electrostatic force in the direction toward end portion 1 or the direction apart from end portion 1 can be applied to material fragments 101, 102 of mixture 100 according to the state of electrical charging. Thus, a force can be applied to material fragments 101, 102 that fall downward from end portion 1 to be fed into the electrostatic field space formed by the pair of lower counter electrodes 170, in the direction according to the state of electrical charging from the start of falling. This can improve the performance of separating material fragments 101, 102 in the electrostatic field space below end portion 1. The structure of counter electrode 180 may be any structure that can form an electric field between end portion 1 and counter electrode 180. For example, in order to increase the electric field strength in the vicinity of end portion 1, a voltage relatively higher than the voltage applied to the pair of lower counter electrodes 170 may be applied to counter electrode 180. In this case, the area of first surface portion 180a of counter electrode 180 may be larger than, or equal to, or smaller than, the area of second surface portion 1a of end portion 1.

End portion 1 of transfer unit 130 may be integrated with transfer unit 130 or may be a member (electrically conductive member) separated from transfer unit 130. End portion 1 is only required to be configured to allow formation of an electric field in a path region through which mixture 100, fed into the electrostatic field space formed by the pair of lower counter electrodes 170 from transfer unit 130, passes.

In the electrostatic separator described above, the horizontal position of first end 5b located on the transfer unit 130 side among the opposite ends of counter electrode 180 in the direction of transfer of the mixture is arranged between the horizontal position of second end 5c located opposite to first end 5b among the opposite ends of counter electrode 180 and the horizontal position of end portion 1.

In this case, since part of counter electrode 180 is not arranged vertically above end portion 1, an electric field is not formed along the vertically upward direction from end portion 1, and an electric field is formed along the lateral direction or the oblique direction from end portion 1. This can avoid the direction of the electrostatic force applied to material fragments 101, 102 of mixture 100 from being the vertically upward direction. In other words, the direction of the electrostatic force to which material fragments 101, 102 are subjected is the lateral direction or the oblique direction, enabling separation of material fragments 101, 102 in the lateral direction by quality of material.

In the electrostatic separator described above, second surface portion 1a has a curved surface shape projecting toward counter electrode 180. First surface portion 180a has curved surface shape recessed so as to be apart from end portion 1.

In this case, the distance between end portion 1 and the central portion of counter electrode 180 can be extended compared with the case where counter electrode 180 has a plate shape. This can reduce a possibility that material fragment 102 of mixture 100 which has jumped out from end portion 1 may collide with counter electrode 180. As described above, electric field concentrated region 2 can be formed in the vicinity of end portion 1 while suppressing collision of material fragment 102 with counter electrode 180.

In the cross-section of the electrostatic separator described above which is taken along the direction of transfer of mixture 100 in transfer unit 130, the sectional shape of first surface portion 180a of counter electrode 180 may be an arc sectional shape. Center P1 of the radius of curvature in the sectional shape of first surface portion 180a may overlap end portion 1.

In this case, as a high voltage is applied to counter electrode 180, an electric field can be easily formed between end portion 1 and counter electrode 180, and electric field concentrated region 2 can be formed in the vicinity of end portion 1.

In the electrostatic separator described above, the pair of lower counter electrodes 170 may be spaced from each other in the direction from end portion 1 toward counter electrode 180. The polarity of counter electrode 180 may be the same as the polarity of electrodes 4a, 4b located on the counter electrode 180 side in the pair of lower counter electrodes 170. In this case, movement of material fragments 101, 102 subjected to the electrostatic force by electric field concentrated region 2 formed in the vicinity of end portion 1 can be facilitated further by the electrostatic field formed by the pair of lower counter electrodes 170. This enables more reliable separation of material fragments 101, 102.

In the electrostatic separator described above, the shape of second surface portion 1a of end portion 1 is a curved surface shape. Also, in the cross-section in the vertical direction along the direction of transfer of mixture 100, the shape of the second surface portion of end portion 1 is a curved line shape. In this cross-section, the second surface portion of end portion 1 may have an arc shape. The radius of curvature of the arc-shaped second surface portion may be 0.5 mm or more and 200 mm or less. In this case, an excessive increase in electric field strength can be suppressed in electric field concentrated region 2 in the vicinity of end portion 1.

In the electrostatic separator described above, counter electrode 180 may be arranged obliquely above end portion 1 as viewed from end portion 1. In this case, for example, even when material fragments 101, 102 are floated above transfer unit 130 (are a little apart from end portion 1) by the vibratory feeder or the like serving as transfer unit 130, the electrostatic force in the direction toward end portion 1 or the direction apart from end portion 1 can be reliably applied to material fragments 101, 102 that pass through the vicinity of end portion 1 according to the state of electrical charging.

### Embodiment 2

### <Structure of Electrostatic Separator>

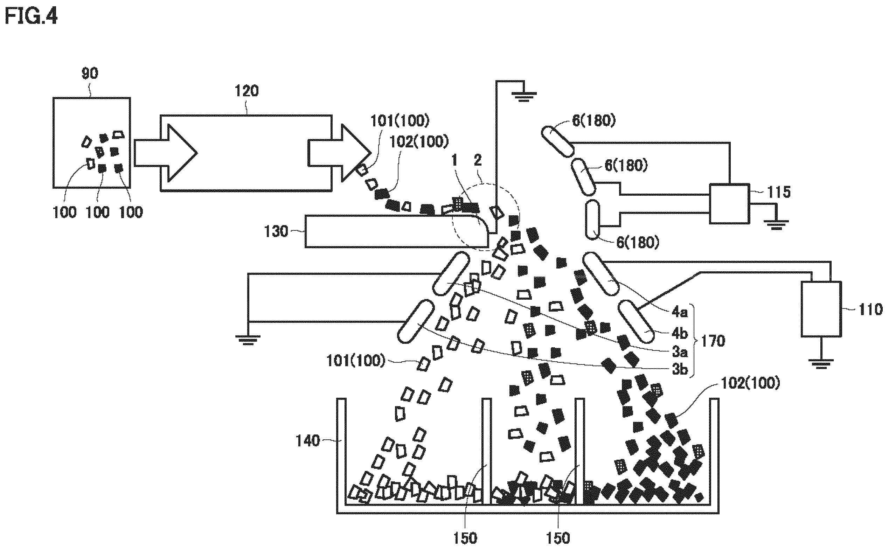

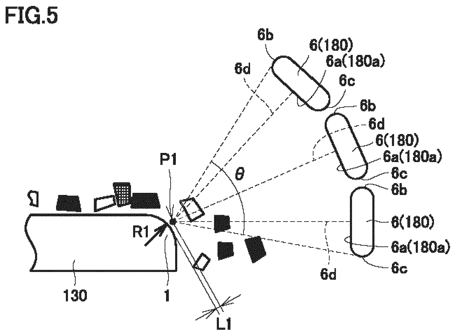

Fig. 4 is a schematic view of an electrostatic separator according to Embodiment 2. Fig. 5 is a partially enlarged schematic view of the electrostatic separator shown in Fig. 4. Fig. 5 corresponds to Fig. 2. The electrostatic separator shown in Figs. 4 and 5 can basically include similar components and achieve similar effects to those of the electrostatic separator shown in Figs. 1 to 3, but is different from the electrostatic separator shown in Figs. 1 to 3 in the structure of counter electrode 180. Specifically, in the electrostatic separator shown in Figs. 4 and 5, counter electrode 180 includes a plurality of electrode portions 6 independent of each other. Electrode portions 6 are each electrically connected to power supply 115. Power supply 115 applies a voltage to electrode portions 6. As a voltage is applied to electrode portions 6 by power supply 115, an electric field is formed between end portion 1 and electrode portions 6. Also, electric field concentrated region 2 is formed in the vicinity of end portion 1, similarly to the electrostatic separator shown in Figs. 1 to 3.

Electrode portions 6 face end portion 1 and include a surface 6a forming first surface portion 180a. Surface 6a is a flat surface. As shown in Fig. 5, the surface shape of first end 6b, which is an upper end portion among the opposite ends of each of electrode portions 6 in the vertical direction, is a curved surface shape. The surface shape of second end 6c, which is a lower end portion among electrode portions 6 in the vertical direction, is also a curved surface shape. Each of electrode portions 6 is formed of a plate block including an electric conductor.

Electrode portions 6 are arranged to face end portion 1, side by side upward from the position horizontally facing end portion 1, as shown in Fig. 5. Electrode portions 6 are spaced from each other. Electrode portion 6 located at a higher position has a larger angle (inclination angle) formed between the vertical direction and surface 6a in each of electrode portions 6. From a different perspective, electrode portions 6 are arranged on an imaginary arc centered around end portion 1, as shown in Fig. 5. In electrode portions 6, a perpendicular line 6d, which passes through the center of surface 6a forming first surface portion 180a and is perpendicular to surface 6a, extends so as to overlap end portion 1. That is to say, surfaces 6a of electrode portions 6 face end portion 1.

Although the number of electrode portions 6 is three in the electrostatic separator shown in Figs. 4 and 5, this number may be two, or four or more. Electrode portions 6 may be positioned such that perpendicular lines 6d of electrode portions 6 intersect each other at center P1 as shown in Fig. 5. Center P1 may be positioned inside end portion 1, or center P1 may overlap the surface of end portion 1. Center P1 may be apart from end portion 1 as shown in Fig. 5. In this case, distance L1 between end portion 1 and center P1 is 180 mm or less.

As viewed from center P1, angle θ (center angle or spread angle) formed between first end 6b of electrode portion 6 located uppermost among electrode portions 6 and second end 6c of electrode portion 6 located lowermost among electrode portions 6 can be set to, for example, 30° or more and 90° or less. This angle θ may be 40° or more, 45° or more, or 50° or more. This angle θ may be 80° or less, or 70° or less. Such an angle θ can improve the separation performance in the electrostatic separator.

In electrode portions 6 serving as counter electrodes 180, a total area of surfaces 6a that face end portion 1 is larger than an area of second surface portion 1a (see Fig. 3) of end portion 1 which faces electrode portions 6. The total area of surfaces 6a of electrode portions 6 that correspond to first surface portions 180a corresponds to the area of first surface portion 180a of counter electrode 180. The area of second surface portion 1a of end portion 1 may be equal to or less than 20% of the total area of surfaces 6a of electrode portions 6. Also in this case, similarly to the electrostatic separator shown in Figs. 1 to 3, an electric field can concentrate in the vicinity of second surface portion 1a of end portion 1, leading to a sufficiently high electric field strength in the vicinity of second surface portion 1a. Surface 6a of electrode portion 6 refers to the entire surface portion of electrode portion 6 which is visible from the end portion 1 side.

In the direction of transfer of mixture 100 in transfer unit 130 shown in Fig. 5, the horizontal (in Fig. 5, lateral) position of first end 5b of electrode portion 6 closest to transfer unit 130 (alternatively, electrode portion 6 located uppermost among electrode portions 6), which is located on the transfer unit 130 side, is arranged between the horizontal position of second end 6c, which is the lower end, of the lowermost electrode portion 6 among electrode portions 6 and the horizontal position of end portion 1.

### <Functions>

In the electrostatic separator, counter electrode 180 may include electrode portions 6 independent of each other. In this case, electrode portions 6 can be combined to achieve a somewhat complicated structure. Thus, manufacturing cost can be lower than when an integrated body having a complicated shape is formed as counter electrode 180. In particular, the effect described above can be achieved by configuring electrode portions 6 to have a relatively simple shape, such as a plate shape.

In the electrostatic separator described above, surface 6a forming first surface portion 180a that faces end portion 1 may be a flat surface in electrode portions 6. Electrode portions 6 may have a plate shape. In this case, for example, as electrode portions 6 are arranged on an imaginary arc as shown in Figs. 4 and 5, counter electrode 180, in which the surface facing end portion 1 can be regarded microscopically as having a curved surface shape, can be achieved.

In the electrostatic separator described above, in electrode portions 6, perpendicular line 6d that passes through the center of surface 6a forming first surface portion 180a and is perpendicular to surface 6a may overlap end portion 1. In this case, electrode portions 6 are arranged such that surfaces 6a of electrode portions 6 each face end portion 1. Thus, electric field concentrated region 2 can be easily formed in the vicinity of end portion 1 upon application of a high voltage to electrode portions 6.

### Example

### <Structure of Electrostatic Separator>

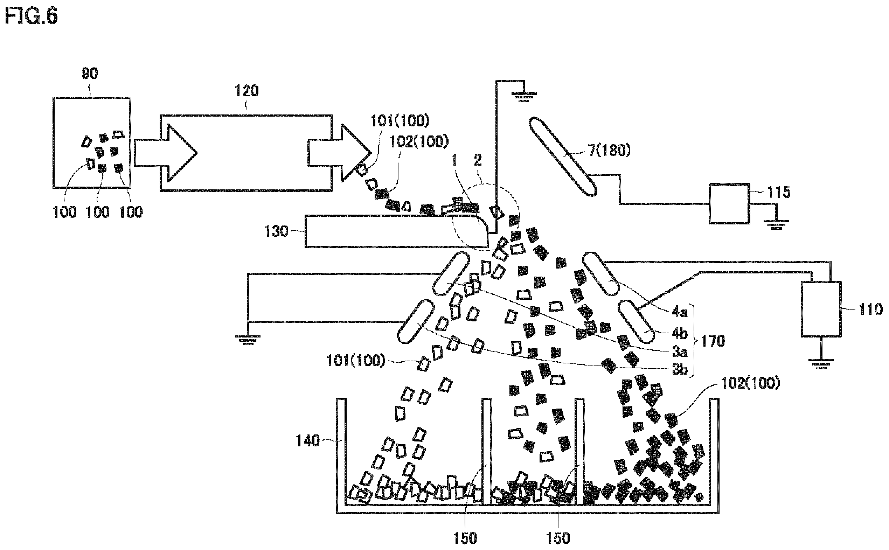

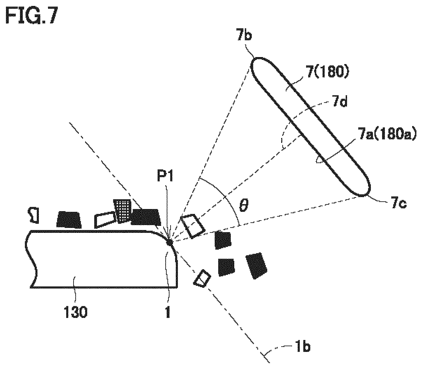

Fig. 6 is a schematic view of an electrostatic separator according to an example not falling under the claim wording. Fig. 7 is a partially enlarged schematic view of the electrostatic separator shown in Fig. 6. Fig. 7 corresponds to Fig. 2. The electrostatic separator shown in Figs. 6 and 7 can basically include similar components and can achieve similar effects to those of the electrostatic separator shown in Figs. 1 to 3, but is different from the electrostatic separator shown in Figs. 1 to 3 in the structure of counter electrode 180. Specifically, in the electrostatic separator shown in Figs. 6 and 7, counter electrode 180 has a plate shape, and surface 7a that serves as first surface portion 180a facing end portion 1 has a flat surface shape.

In plate electrode 7 that is counter electrode 180, a first end 7b, which is located on the upper side of the end portions of plate electrode 7 in the vertical direction, and a second end 7c, which is located opposite to first end 7b, each have a curved surface shape.

Plate electrode 7 is formed of a plate-block-shaped electric conductor. In the horizontal direction, plate electrode 7 is arranged while being inclined with respect to the vertical direction such that first end 7b is closer to end portion 1 than second end 7c is to end portion 1. From a different perspective, plate electrode 7 is positioned such that first end 7b and second end 7c are arranged on an imaginary arc centered around center P1 shown in Fig. 7.

Plate electrode 7 is electrically connected to power supply 115. Power supply 115 applies a voltage to plate electrode 7. As a voltage is applied to plate electrode 7 by power supply 115, an electric field is formed between end portion 1 and plate electrode 7. As a result, electric field concentrated region 2 is formed in the vicinity of end portion 1, similarly to the electrostatic separator shown in Figs. 1 to 3.

In plate electrode 7 serving as counter electrode 180, the area of surface 7a facing end portion 1 is larger than the area of second surface portion 1a (see Fig. 3) of end portion 1 which faces plate electrode 7. The area of surface 7a of plate electrode 7 corresponds to the area of first surface portion 180a of counter electrode 180. The area of second surface portion 1a of end portion 1 may be equal to or less than 20% of the area of surface 7a of plate electrode 7. Also in this case, similarly to the electrostatic separator shown in Figs. 1 to 3, an electric field can concentrate in the vicinity of second surface portion 1a of end portion 1, leading to a sufficiently high electric field strength in the vicinity of second surface portion 1a. Surface 7a of plate electrode 7 refers to the entire surface portion of plate electrode 7 which is visible from the end portion 1 side.

In the direction of transfer of mixture 100 in transfer unit 130 shown in Fig. 7, the horizontal (in Fig. 7, lateral) position of first end 7b that is the end portion of plate electrode 7 closest to transfer unit 130 is arranged between the horizontal positon of second end 7c of plate electrode 7, which is located opposite (on the lower side) to first end 7b, and the horizontal position of end portion 1.

Considered here is a perpendicular line 7d, which is perpendicular to surface 7a of plate electrode 7 from the center of surface 7a, as shown in Fig. 7. Perpendicular line 7d overlaps end portion 1. The intersection of perpendicular line 7d and second surface portion 1a (see Fig. 3) that is a surface of end portion 1 is referred to as center P1. As viewed from center P1, angle θ (center angle or spread angle) formed between first end 7b and second end 7c of plate electrode 7 can be set to, for example, 30° or more and 90° or less. This angle θ may be 40° or more, 45° or more, or 50° or more. This angle θ may be 80° or less, or 70° or less. Such an angle θ can improve the separation performance in the electrostatic separator.

A tangent line 1b on the surface of end portion 1 at center P1 described above may be parallel to the direction of extension of surface 7a of plate electrode 7. In this case, the apparent area of surface 7a of plate electrode 7 viewed from end portion 1 can be made relatively large. Thus, electric field concentrated region 2 can be formed reliably in the vicinity of end portion 1.

Although plate electrode 7 is preferably positioned such that perpendicular line 7d extending perpendicular to surface 7a from the center of surface 7a of plate electrode 7 overlaps end portion 1, within the range in which the shortest distance from second surface portion 1a (see Fig. 3) of end portion 1 to perpendicular line 7d is 180 mm or less, plate electrode 7 may be arranged such that perpendicular line 7d does not overlap second surface portion 1a of end portion 1. Also in this case, the separation performance in the electrostatic separator can be improved.

### <Functions>

In the electrostatic separator described above, first surface portion 180a may have a flat surface shape in counter electrode 180. Plate electrode 7 having a plate shape may be used as counter electrode 180. In this case, the cost of manufacturing counter electrode 180 can be lower than when counter electrode 180 having an aspect shown in Fig. 1 or the like is used. In addition, electric field concentrated region 2 can be formed in the vicinity of end portion 1 also by the structure as shown in Figs. 6 and 7, and accordingly, high separation performance can be achieved, similarly to the electrostatic separator shown in Figs. 1 to 3.

### Embodiment 3

### <Structure of Electrostatic Separator>

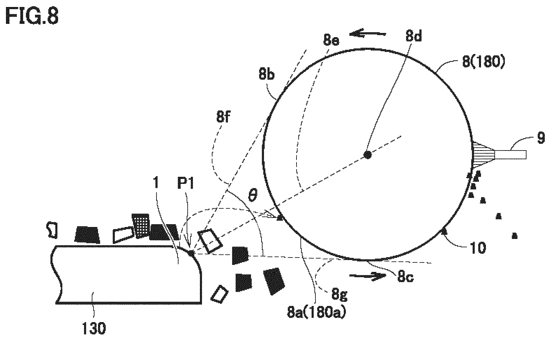

Fig. 8 is a partially enlarged schematic view of an electrostatic separator according to Embodiment 3 . Fig. 8 corresponds to Fig. 2. The electrostatic separator shown in Fig. 8 can basically include similar components and achieve similar effects to those of the electrostatic separator shown in Figs. 1 to 3, but is different from the electrostatic separator shown in Figs. 1 to 3 in the structure of counter electrode 180. Specifically, in the electrostatic separator shown in Fig. 8, counter electrode 180 has a roller (cylindrical) shape, and a surface 8a, which serves as first surface portion 180a facing end portion 1, has a curved surface shape. Further, as viewed from roller electrode 8 serving as counter electrode 180, a cleaning brush 9 is arranged to be in contact with the surface of roller electrode 8 on the opposite side (rear side) to the end portion 1 side. Cleaning brush 9 may be arranged to face the entire roller electrode 8 in the width direction perpendicular to the sheet of paper of Fig. 8. Cleaning brush 9 is only required to be arranged at least at the center of roller electrode 8 in the width direction. Cleaning brush 9 may be arranged in part of roller electrode 8 in the width direction.

Roller electrode 8 is rotatable in the direction indicated by the arrows with a central axis 8d extending perpendicular to the sheet of paper of Fig. 8 as the center of rotation. Any drive device such as an electric motor can be used in order to rotate roller electrode 8. Roller electrode 8 is connected with power supply 115 (see Fig. 1). A voltage is applied to roller electrode 8 by power supply 115. This forms an electric field between end portion 1 and roller electrode 8. As a result, an electric field concentrated region is formed in the vicinity of end portion 1. At this time, roller electrode 8 may continuously rotate or may repeat rotation and stop at predetermined time intervals. The rotation of roller electrode 8 can remove an adherent 10 adhering to roller electrode 8 from the surface of roller electrode 8 with cleaning brush 9.

In roller electrode 8 that serves as counter electrode 180, the area of surface 8a facing end portion 1 is larger than the area of second surface portion 1a (see Fig. 3) facing roller electrode 8 at end portion 1. The area of surface 8a of roller electrode 8 which faces end portion 1 corresponds to the area of first surface portion 180a of counter electrode 180. The area of second surface portion 1a (see Fig. 3) of end portion 1 may be less than or equal to 20% of the area of surface 8a of roller electrode 8. Also in this case, similarly to the electrostatic separator shown in Figs. 1 to 3, the electric field can concentrate in the vicinity of second surface portion 1a of end portion 1, leading to a sufficiently high electric field strength in the vicinity of second surface portion 1a. Surface 8a of roller electrode 8 refers to the entire surface portion of roller electrode 8 which is visible from the end portion 1 side. In other words, surface 8a described above is a surface region of roller electrode 8 which faces end portion 1 and is located between a first point 8b and a second point 8c, as shown in Fig. 8.

Considered here is a line segment 8e that defines the shortest distance from central axis 8d of roller electrode 8 to end portion 1, as shown in Fig. 8. Line segment 8e overlaps end portion 1. The intersection of line segment 8e and second surface portion 1a (see Fig. 3) that is the surface of end portion 1 is referred to as center P1. As viewed from center P1, angle θ (center angle or spread angle) formed between first point 8b, which is tangent to a tangent line 8f of roller electrode 8, and second point 8c, which is tangent to a tangent line 8g, can be set to, for example, 30° or more and 90° or less. This angle θ may be 40° or more, 45° or more, or 50° or more. This angle θ may be 80° or less, or 70° or less. Such an angle θ can improve the separation performance in the electrostatic separator.

### <Functions>

In the electrostatic separator described above, counter electrode 180 may have a roller shape. Counter electrode 180 having a roller shape may rotate with central axis 8d as the center of rotation. The electrostatic separator may further include cleaning brush 9 as a cleaning member that contacts counter electrode 180. Cleaning brush 9 may be arranged, in counter electrode 180, opposite to the side on which counter electrode 180 faces end portion 1. In this case, in addition to the effects achieved by the electrostatic separator shown in Fig. 1, when adherent 10 adheres to counter electrode 180, adherent 10 can be moved from the region that faces end portion 1 by rotating roller electrode 8 serving as counter electrode 180. Further, adherent 10 can be removed from roller electrode 8 by cleaning brush 9. This can suppress a decrease in strength of the separation electric field (the electric field formed between counter electrode 180 and end portion 1) or occurrence of abnormal discharge due to adhesion of adherent 10 to counter electrode 180. Thus, the separation performance of the electrostatic separator can be stabilized.

It should be understood that the embodiments disclosed herein have been presented for the purpose of illustration and non-restrictive in every respect. Unless there is any inconsistency, at least two of the embodiments disclosed herein may be combined. It is therefore intended that the basic scope of the present disclosure is defined by the appended claims.

### REFERENCE SIGNS LIST

1 end portion; 1a second surface portion; 1b, 8f, 8g tangent line; 2 electric field concentrated region; 3a, 3b, 4a, 4b electrode; 5 curved electrode; 5a inner circumferential surface; 5b, 6b, 7b first end; 5c, 6c, 7c second end; 6 electrode portion; 6a, 7a, 8a surface; 6d, 7d perpendicular line; 7 plate electrode; 8 roller electrode; 8b first point; 8c second point; 8d central axis; 8e line segment; 9 cleaning brush; 10 adherent; 90 storage unit; 100 mixture; 101, 102 material fragment; 110, 115 power supply; 120 charge processing unit; 130 transfer unit; 140 collection container; 150 partitioning member; 170 pair of lower counter electrodes; 180 counter electrode; 180a first surface portion; L1 distance; P1 center; R1 radius of curvature.

## Claims

1. An electrostatic separator comprising:
a transfer unit (130) to transfer a mixture (100) that is electrically charged,
the mixture (100) being a target fed into an electrostatic field space to be separated according to a state of electrical charging,
the transfer unit (130) including a vibratory feeder and an end portion (1) as agrounded curved portion in a direction of transfer of the mixture (100),
the electrostatic separator further comprising:
a counter electrode (180) facing the end portion (1): and
a pair of lower counter electrodes (170) located below the end portion (1),
the pair of lower counter electrodes (170) being spaced from each other, **characterized in that**
the counter electrode (180) is curved relative to the end portion (1) and forms an electric field between the end portion (1) and the counter electrode (180) upon application of a voltage.

2. The electrostatic separator according to claim 1, wherein
the counter electrode (180) includes a first surface portion (180a) facing the end portion (1), and
the end portion (1) includes a second surface portion (la) facing the counter electrode (180) and functioning as an electrode.

3. The electrostatic separator according to claim 2,
wherein the first surface portion (180a) of the counter electrode (180) has an area larger than an area of the second surface portion (1a) of the end portion (1).

4. The electrostatic separator according to any one of the preceding claims, wherein
the second surface portion (1a) has a curved surface shape projecting toward the counter electrode (180), and
the first surface portion (180a) has a curved surface shape recessed so as to be apart from the end portion (1).

5. The electrostatic separator according to claim 4, wherein
in a cross-section taken along the direction of transfer of the mixture (100) in the transfer unit (130),
a sectional shape of the first surface portion (180a) of the counter electrode (180) is an arc shape, and
a center (P1) of a radius of curvature in the sectional shape of the first surface portion (180a) overlaps the end portion (1).

6. The electrostatic separator according to any one of claims 1-3, wherein
the counter electrode (180) includes a plurality of electrode portions (6) independent of each other.

7. The electrostatic separator according to any one of claims 1 to 6, wherein
the counter electrode (180) is arranged obliquely above the end portion (1) as viewed from the end portion (1).

## Patentansprüche

1. Elektrostatischer Separator, umfassend:
eine Transfereinheit (130) zum Transferieren eines Gemisches (100), das elektrisch geladen ist,
wobei das Gemisch (100) ein Ziel ist, das in einen Raum eines elektrostatischen Feldes eingespeist wird, der gemäß einem Zustand der elektrischen Ladung zu trennen ist,
wobei die Transfereinheit (130) einen Schwingförderer und einen Endabschnitt (1) als einen geerdeten gekrümmten Abschnitt in einer Richtung des Transfers des Gemisches (100) beinhaltet,
wobei der elektrostatische Separator ferner Folgendes umfasst:
eine Gegenelektrode (180), die dem Endabschnitt (1) zugewandt ist; und
ein Paar von unteren Gegenelektroden (170), das sich unter dem Endabschnitt (1) befindet,
wobei das Paar von unteren Gegenelektroden (170) voneinander beabstandet ist,
**dadurch gekennzeichnet, dass**
die Gegenelektrode (180) relativ zu dem Endabschnitt (1) gekrümmt ist und ein elektrisches Feld zwischen dem Endabschnitt (1) und der Gegenelektrode (180) bei Anlegen einer Spannung bildet.

2. Elektrostatischer Separator nach Anspruch 1, wobei
die Gegenelektrode (180) einen ersten Oberflächenabschnitt (180a) beinhaltet, der dem Endabschnitt (1) zugewandt ist, und
der Endabschnitt (1) einen zweiten Oberflächenabschnitt (1a) beinhaltet, der der Gegenelektrode (180) zugewandt ist und als eine Elektrode fungiert.

3. Elektrostatischer Separator nach Anspruch 2,
wobei der erste Oberflächenabschnitt (180a) der Gegenelektrode (180) eine größere Fläche als eine Fläche des zweiten Oberflächenabschnitts (1a) des Endabschnitts (1) aufweist.

4. Elektrostatischer Separator nach einem der vorhergehenden Ansprüche, wobei
der zweite Oberflächenabschnitt (1a) eine gekrümmte Oberflächenform aufweist, die zu der Gegenelektrode (180) vorsteht, und
der erste Oberflächenabschnitt (180a) eine gekrümmte Oberflächenform aufweist, die vertieft ist, um von dem Endabschnitt (1) beabstandet zu sein.

5. Elektrostatischer Separator nach Anspruch 4, wobei
in einem Querschnitt entlang der Richtung des Transfers des Gemisches (100) in der Transfereinheit (130)
eine Schnittform des ersten Oberflächenabschnitts (180a) der Gegenelektrode (180) eine Bogenform ist und
ein Mittelpunkt (P1) eines Krümmungsradius in der Schnittform des ersten Oberflächenabschnitts (180a) den Endabschnitt (1) überlappt.

6. Elektrostatischer Separator nach einem der Ansprüche 1-3, wobei
die Gegenelektrode (180) eine Vielzahl von Elektrodenabschnitten (6) beinhaltet, die unabhängig voneinander sind.

7. Elektrostatischer Separator nach einem der Ansprüche 1 bis 6, wobei
die Gegenelektrode (180) vom Endabschnitt (1) aus gesehen schräg über dem Endabschnitt (1) angeordnet ist.

## Revendications

1. Séparateur électrostatique comprenant :
une unité de transfert (130) pour transférer un mélange (100) qui est chargé électriquement,
le mélange (100) étant une cible apportée dans un espace de champ électrostatique afin d'être séparée selon un état de charge électrique,
l'unité de transfert (130) incluant un dispositif d'apport vibrant et une portion d'extrémité (1) en tant que portion courbée mise à la terre dans une direction de transfert du mélange (100),
le séparateur électrostatique comprenant en outre :
une contre-électrode (180) faisant face à la portion d'extrémité (1) :
et
une paire de contre-électrodes inférieures (170) situées sous la portion d'extrémité (1),
la paire de contre-électrodes inférieures (170) étant espacées l'une de l'autre, **caractérisé en ce que**
la contre-électrode (180) est courbée par rapport à la portion d'extrémité (1) et forme un champ électrique entre la portion d'extrémité (1) et la contre-électrode (180) lors de l'application d'une tension.

2. Séparateur électrostatique selon la revendication 1, dans lequel
la contre-électrode (180) inclut une première portion de surface (180a) faisant face à la portion d'extrémité (1), et
la portion d'extrémité (1) inclut une deuxième portion de surface (1a) faisant face à la contre-électrode (180) et fonctionnant comme une électrode.

3. Séparateur électrostatique selon la revendication 2,
dans lequel la première portion de surface (180a) de la contre-électrode (180) a une aire supérieure à une aire de la deuxième portion de surface (1a) de la portion d'extrémité (1).

4. Séparateur électrostatique selon l'une quelconque des revendications précédentes, dans lequel
la deuxième portion de surface (1a) présente une forme de surface courbée faisant saillie vers la contre-électrode (180), et
la première portion de surface (180a) présente une forme de surface courbée en retrait de façon à être écartée de la portion d'extrémité (1).

5. Séparateur électrostatique selon la revendication 4, dans lequel
dans une coupe prise suivant la direction de transfert du mélange (100) dans l'unité de transfert (130),
une forme en coupe de la première portion de surface (180a) de la contre-électrode (180) est une forme en arc, et
un centre (P1) d'un rayon de courbure dans la forme en coupe de la première portion de surface (180a) chevauche la portion d'extrémité (1).

6. Séparateur électrostatique selon l'une quelconque des revendications 1 à 3, dans lequel
la contre-électrode (180) inclut une pluralité de portions d'électrode (6) indépendantes les unes des autres.

7. Séparateur électrostatique selon l'une quelconque des revendications 1 à 6, dans lequel
la contre-électrode (180) est agencée obliquement au-dessus de la portion d'extrémité (1) dans une vue depuis la portion d'extrémité (1).
